# EUROPEAN PATENT APPLICATION

(11) **EP 4 783 056 A1**
(43) Date of publication of application: **29.07.2026**
(21) Application number: 25153450.9
(22) Date of filing: 23.01.2025
(51) Int. Cl.: G06F 30/12, G06F 30/15, G06F 30/18, G06F 30/20, G06F 111/18

(54) **AUTOMATICALLY GENERATING ON-DEMAND WIRING ELEMENT OPTIMIZED MESHES FOR AUGMENTED REALITY (AR) DEVICES**

(71) Applicant: Volvo Truck Corporation, 405 08 Göteborg (SE)
(72) Inventor: BARNOUX, Vincent, 69230 ST GENIS LAVAL (FR); LEMEE, Kevin, 69009 LYON (FR); HÖGLIND, Andreas, 423 33 TORSLANDA (SE)
(74) Representative: Kransell & Wennborg KB

(57) **Abstract**

Automatically generating on-demand wiring element optimized meshes for augmented reality (AR) devices is disclosed herein. In one example, a computer system comprises processing circuitry configured to obtain a structured file corresponding to a wiring element of a non-virtual device, wherein the structured file comprises wiring element metadata that comprises a first connector terminal descriptor, a second connector terminal descriptor, and a segment descriptor; the segment descriptor corresponds to a plurality of point descriptors; each point descriptor of the plurality of point descriptors comprises a location coordinate; and the structured file omits mesh geometry data for the wiring element. The processing circuitry further generates a three-dimensional (3D) mesh for the wiring element based on the structured file, receive visual imagery data of the non-virtual device, and display a rendering of the 3D mesh overlaid on the visual imagery data of the non-virtual device.

## Description

### TECHNICAL FIELD

The disclosure relates generally to the use of augmented reality (AR) devices to visualize elements of non-virtual devices such as vehicles and/or industrial machines. In particular aspects, the disclosure relates to the automatic generation of on-demand optimized meshes for displaying wiring elements of non-virtual devices using AR devices.

The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Augmented reality (AR), as used herein, refers to computer-implemented techniques for generating a three-dimensional (3D) rendering in which computer-generated digital information or virtual objects are overlaid onto a non-virtual real-world environment. AR devices, such as smartphones, tablet devices, and specialized AR headsets or glasses (as non-limiting examples), capture visual imagery data of a non-virtual scene, identify non-virtual objects and surfaces within that non-virtual scene, and project virtual objects onto a user's field of vision. In this manner, an AR device can generate an immersive environment in which the user can view and/or interact with the virtual objects as if they existed in the non-virtual scene.

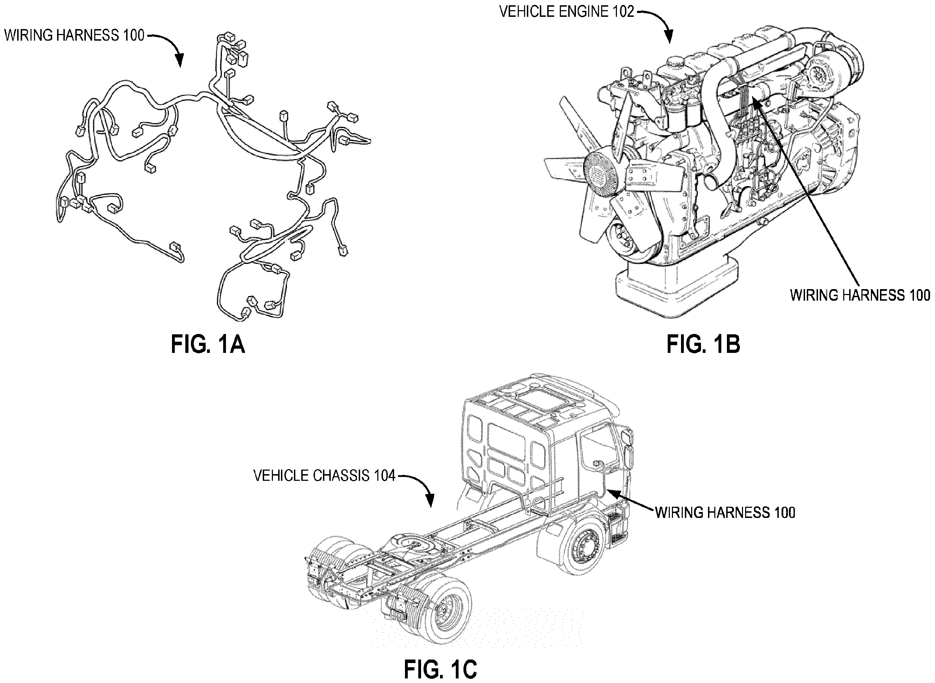

AR can be particularly useful for assisting technicians in visualizing elements of a non-virtual device (e.g., a vehicle, as a non-limiting example) for purposes of maintenance and repair. For example, a technician may need to identify and visualize a wiring element (such as a specific wire, a wire bundle, a wiring harness, and/or the like) of a vehicle. **FIG. 1A** illustrates an exemplary wiring harness **100** viewed in isolation (e.g., as it may appear in a manufacturer repair manual). The wiring harness **100** may be a component of a vehicle engine such as the vehicle engine **102** shown in **FIG. 1B****,** and/or may extend throughout a vehicle chassis such as the vehicle chassis **104** of **FIG. 1C****.** Consequently, it may be difficult for the technician to locate the wiring harness **100** when visually examining the vehicle engine **102** and/or the vehicle chassis **104.** In this regard, an AR device may be used to project a virtual representation of the wiring harness **100** over visual imagery of the vehicle engine **102** and/or the vehicle chassis **104,** allowing the technician to more easily identify the wiring element and visualize its location relative to other elements of the vehicle.

Using AR as described above for maintenance and repair of a wiring element may be conventionally accomplished by first identifying key points of flow of the wiring element, and generating a Computer-Aided Design (CAD) model of the wiring element through those key points of flow. The CAD model is represented by a CAD native data file that includes a detailed digital representation of the wiring element, including its geometry, dimensions, and other attributes and metadata. The CAD native data file may then be "decimated," or simplified into a data file of smaller size and reduced complexity, and the decimated data file may be transmitted to an AR device. The AR device can use the decimated data file to visualize the wiring element by generating a 3D mesh that is overlaid on visual imagery data of the vehicle.

However, this conventional approach may suffer from shortcomings in some scenarios. In particular, the conversion of a CAD native data file into a decimated data file may seek to strike a balance among competing goals such as optimizing visual quality for user experience, minimizing polygon count to improve device performance, and minimizing file size to reduce transmission time and processing requirements. In the specific case of AR visualization of wiring elements of a vehicle, the relatively large number of polygons used to generate a CAD model of a wiring element generally results in a decimated data file that has a size too large to be easily downloaded to an AR device, and that may be difficult to optimize while retaining sufficient visual quality. Moreover, a conventional decimated data file may not allow enough flexibility to render a single wire, as the original CAD native data file may have been generated at a wire bundle level.

### SUMMARY

Exemplary aspects disclosed herein include automatically generating on-demand wiring element optimized meshes for augmented reality (AR) devices. In an exemplary aspect, a computer system provides processing circuitry (e.g., as part of an AR device) that is configured to obtain a structured file corresponding to a wiring element of a non-virtual device (such as a vehicle, as a non-limiting example). The structured file comprises wiring element metadata that comprises a first connector terminal descriptor, a second connector terminal descriptor, and a segment descriptor that corresponds to a segment of the wiring element. Additionally, the segment descriptor corresponds to a plurality of point descriptors that each comprises a location coordinate. The structured file otherwise omits mesh geometry data for the wiring element.

The processing circuitry then generates a three-dimensional (3D) mesh for the wiring element based on the structured file. The processing circuitry subsequently receives visual imagery data of the non-virtual device, and displays a rendering of the 3D mesh overlaid on the visual imagery data of the non-virtual device. In this manner, the examples disclosed herein may provide faster downloading of visualization data, faster AR rendering, and greater visualization customization.

In some examples, the processing circuitry of the computer system (e.g., as part of a computing device that may be separate from the AR device) is configured to first obtain a Computer-Aided Design (CAD) native data file corresponding to the wiring element of the non-virtual device, and generate the structured file based on the CAD native data file. Some such examples may provide that generating the structured file is accomplished by identifying a CAD data element within the CAD native data file that corresponds to, e.g., the first connector terminal descriptor, the second connector terminal descriptor, the segment descriptor, or a point descriptor of the plurality of point descriptors of the segment descriptor. The processing circuitry then generates the wiring element metadata based on the identified CAD data element and stores the structured file.

Some examples may further provide that the processing circuitry of the computer system (e.g., the AR device) receives a first user input indicating a selection of the non-virtual device, and subsequently obtains the structured file responsive to the first user input. According to some examples, the processing circuitry may receive a second user input that indicates a selection of the wiring element, and subsequently generates the 3D mesh responsive to the second user input.

In some examples, generating the 3D mesh may be accomplished by the processing circuitry performing a series of operations. The processing circuitry may first determine a polygon count for the segment, based on a length of the segment and the location coordinates of the plurality of point descriptors of the segment descriptor. Some such examples may further provide that each point descriptor of the plurality of point descriptors further comprises one or more corresponding tangent descriptors, and determining the polygon count for the segment is further based on the one or more tangent descriptors of the plurality of point descriptors of the segment descriptor. The processing circuitry then renders the segment using the determined polygon count.

According to a first aspect of the disclosure, a computer system is provided. The computer system comprises processing circuitry that is configured to obtain a structured file corresponding to a wiring element of a non-virtual device, wherein the structured file comprises wiring element metadata that comprises a first connector terminal descriptor, a second connector terminal descriptor, and a segment descriptor corresponding to a segment of the wiring element; the segment descriptor corresponds to a plurality of point descriptors; each point descriptor of the plurality of point descriptors comprises a location coordinate; and the structured file omits mesh geometry data for the wiring element. The processing circuitry is further configured to generate a 3D mesh for the wiring element based on the structured file, receive visual imagery data of the non-virtual device, and display a rendering of the 3D mesh overlaid on the visual imagery data of the non-virtual device. A technical benefit may include faster downloading of data and faster loading of visualizations due to the omission of mesh geometry data, as well as greater visualization customization (such as, e.g., a more granular view of each individual wiring element).

Optionally in some examples, including at least one preferred example, the processing circuitry is further configured to obtain a CAD native data file corresponding to the wiring element, generate the structured file based on the CAD native data file, and store the structured file. A technical benefit may include backwards compatibility with existing CAD systems and associated native data files, and improved performance by preprocessing the CAD native data file into the structured file prior to use.

Optionally in some examples, including at least one preferred example, the processing circuitry is configured to generate the structured file based on the CAD native data file by being configured to identify a CAD data element within the CAD native data file that corresponds to one of the first connector terminal descriptor, the second connector terminal descriptor, the segment descriptor, and a point descriptor of the plurality of point descriptors of the segment descriptor. The processing circuitry is also configured to generate the wiring element metadata based on the identified CAD data element. A technical benefit may include efficient generation of the structured file by processing only CAD data elements required to generate the 3D mesh.

Optionally in some examples, including at least one preferred example, the processing circuitry is configured to generate the 3D mesh for the wiring element based on the structured file by being configured to determine a polygon count for the segment, based on a length of the segment and the location coordinates of the plurality of point descriptors of the segment descriptor, and render the segment using the determined polygon count. A technical benefit may include more efficient rendering of the segment using a custom polygon count that is determined based on the characteristics of the segment.

Optionally in some examples, including at least one preferred example, each point descriptor of the plurality of point descriptors further comprises one or more corresponding tangent descriptors, and the processing circuitry is configured to determine the polygon count for the segment further based on the one or more tangent descriptors of the plurality of point descriptors of the segment descriptor. A technical benefit may include more accurate rendering of the segment by taking into account the tangent descriptors of each point descriptor of the segment.

Optionally in some examples, including at least one preferred example, the processing circuitry is further configured to receive a first user input indicating a selection of the non-virtual device, and obtain the structured file corresponding to the wiring element of the non-virtual device responsive to the first user input. A technical benefit may include increased flexibility by enabling 3D meshes to be generated for different non-virtual devices.

Optionally in some examples, including at least one preferred example, the processing circuitry is further configured to receive a second user input indicating a selection of the wiring element, and generate the 3D mesh based on the structured file responsive to the second user input. A technical benefit may include further increased flexibility by enabling 3D meshes to be generated for different wiring elements within a given non-virtual device.

Optionally in some examples, including at least one preferred example, the wiring element comprises one of a wire, a wiring bundle, and a wiring harness. A technical benefit may include additional flexibility by enabling 3D meshes to be generated for a variety of different types of wiring elements.

Optionally in some examples, including at least one preferred example, the non-virtual device comprises a vehicle. A technical benefit may include extending the usefulness of aspects described herein to scenarios involving wiring elements of vehicles.

According to a second aspect of the disclosure, a computer-implemented method is provided. The method comprises processing circuitry of a computer system obtaining a structured file corresponding to a wiring element of a non-virtual device, wherein the structured file comprises wiring element metadata that comprises a first connector terminal descriptor, a second connector terminal descriptor, and a segment descriptor corresponding to a segment of the wiring element; the segment descriptor corresponds to a plurality of point descriptors; each point descriptor of the plurality of point descriptors comprises a location coordinate; and the structured file omits mesh geometry data for the wiring element. The method further comprises the processing circuitry generating a 3D mesh for the wiring element based on the structured file, receiving visual imagery data of the non-virtual device, and displaying a rendering of the 3D mesh overlaid on the visual imagery data of the non-virtual device. A technical benefit may include faster downloading of data, faster loading of visualizations, and greater visualization customization (such as, e.g., a more granular view of each individual wiring element).

Optionally in some examples, including at least one preferred example, the method further comprises the processing circuitry obtaining, a CAD native data file corresponding to the wiring element, generating the structured file based on the CAD native data file, and storing the structured file. A technical benefit may include backwards compatibility with existing CAD systems and associated native data files, and improved performance by preprocessing the CAD native data file into the structured file prior to use.

Optionally in some examples, including at least one preferred example, the method comprises the processing circuitry generating the structured file based on the CAD native data file by identifying a CAD data element within the CAD native data file that corresponds to one of the first connector terminal descriptor, the second connector terminal descriptor, the segment descriptor, and a point descriptor of the plurality of point descriptors of the segment descriptor, and generating the wiring element metadata based on the identified CAD data element. A technical benefit may include efficient generation of the structured file by processing only CAD data elements required to generate the 3D mesh.

Optionally in some examples, including at least one preferred example, the method comprises the processing circuitry generating the 3D mesh for the wiring element based on the structured file by determining a polygon count for the segment, based on a length of the segment and the location coordinates of the plurality of point descriptors of the segment descriptor, and rendering the segment using the determined polygon count. A technical benefit may include more efficient rendering of the segment using a custom polygon count that is determined based on the characteristics of the segment.

Optionally in some examples, including at least one preferred example, each point descriptor of the plurality of point descriptors further comprises one or more corresponding tangent descriptors, and the method comprises determining the polygon count for the segment further based on the one or more tangent descriptors of the plurality of point descriptors of the segment descriptor. A technical benefit may include more accurate rendering of the segment by taking into account the tangent descriptors of each point descriptor of the segment.

Optionally in some examples, including at least one preferred example, the method further comprises the processing circuitry receiving a first user input indicating a selection of the non-virtual device, wherein obtaining the structured file corresponding to the wiring element of the non-virtual device is responsive to the first user input. A technical benefit may include increased flexibility by enabling 3D meshes to be generated for different non-virtual devices.

Optionally in some examples, including at least one preferred example, the method further comprises the processing circuitry receiving a second user input indicating a selection of the wiring element, wherein generating the 3D mesh based on the structured file is responsive to the second user input. A technical benefit may include further increased flexibility by enabling 3D meshes to be generated for different wiring elements within a given non-virtual device.

Optionally in some examples, including at least one preferred example, the wiring element comprises one of a wire, a wiring bundle, and a wiring harness. A technical benefit may include additional flexibility by enabling 3D meshes to be generated for a variety of different types of wiring elements.

Optionally in some examples, including at least one preferred example, the non-virtual device comprises a vehicle. A technical benefit may include extending the usefulness of aspects described herein to scenarios involving wiring elements of vehicles.

Optionally in some examples, including at least one preferred example, a computer program product is provided. The computer program product comprises program code for performing, when executed by the processing circuitry, any of the aforementioned methods, and may be associated with the above-discussed technical benefits.

Optionally in some examples, including at least one preferred example, a non-transitory computer-readable storage medium is provided. The non-transitory computer-readable storage medium comprises instructions, which, when executed by the processing circuitry, cause the processing circuitry to perform any of the aforementioned methods, and may be associated with the above-discussed technical benefits.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, methods, computer readable media, and computer program products associated with the above discussed technical benefits.

### BRIEF DESCRIPTION OF THE DRAWINGS

Examples are described in more detail below with reference to the appended drawings.
**FIGS. 1A-1C** are diagrams illustrating an exemplary wiring harness, an engine, and a truck chassis, respectively, for which the examples disclosed herein may be used to visualize for purposes of maintenance and repair according to an example;
**FIG. 2** is an exemplary system diagram of a computer system including an augmented reality (AR) device configured to automatically generating on-demand wiring element optimized meshes according to an example;
**FIG. 3** is a block diagram illustrating exemplary constituent elements of the Computer-Aided Design (CAD) native data file of **FIG. 2** and a corresponding exemplary segment of **FIG. 2** according to an example;
**FIG. 4** is a block diagram illustrating exemplary constituent elements of the structured file of **FIG. 2** according to an example;
**FIGS. 5A-5C** provide a flowchart illustrating exemplary operations for automatically generating on-demand wiring element optimized meshes according to an example;
**FIG. 6** is another view of **FIG. 2**, according to an example;
**FIG. 7** provides a flow chart illustrating exemplary operations for automatically generating on-demand wiring element optimized meshes according to an example; and
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Exemplary aspects disclosed herein include automatically generating on-demand wiring element optimized meshes for augmented reality (AR) devices. In an exemplary aspect, a computer system provides processing circuitry (e.g., as part of an AR device) that is configured to obtain a structured file corresponding to a wiring element of a non-virtual device (such as a vehicle, as a non-limiting example). The structured file comprises wiring element metadata that comprises a first connector terminal descriptor, a second connector terminal descriptor, and a segment descriptor that corresponds to a segment of the wiring element. Additionally, the segment descriptor corresponds to a plurality of point descriptors that each comprises a location coordinate. The structured file otherwise omits mesh geometry data for the wiring element.

The processing circuitry then generates a three-dimensional (3D) mesh for the wiring element based on the structured file. The processing circuitry subsequently receives visual imagery data of the non-virtual device, and displays a rendering of the 3D mesh overlaid on the visual imagery data of the non-virtual device. In this manner, the examples disclosed herein provide faster downloading of visualization data, faster AR rendering, and greater visualization customization.

In some examples, the processing circuitry of the computer system (e.g., as part of a computing device that may be separate from the AR device) is configured to first obtain a Computer-Aided Design (CAD) native data file corresponding to the wiring element of the non-virtual device, and generate the structured file based on the CAD native data file. Some such examples may provide that generating the structured file is accomplished by identifying a CAD data element within the CAD native data file that corresponds to, e.g., the first connector terminal descriptor, the second connector terminal descriptor, the segment descriptor, or a point descriptor of the plurality of point descriptors of the segment descriptor. The processing circuitry then generates the wiring element metadata based on the identified CAD data element and stores the structured file.

Some examples may further provide that the processing circuitry of the computer system (e.g., the AR device) receives a first user input indicating a selection of the non-virtual device, and subsequently obtains the structured file responsive to the first user input. According to some examples, the processing circuitry may receive a second user input that indicates a selection of the wiring element, and subsequently generates the 3D mesh responsive to the second user input.

In some examples, generating the 3D mesh may be accomplished by the processing circuitry performing a series of operations. The processing circuitry may first determine a polygon count for the segment, based on a length of the segment and the location coordinates of the plurality of point descriptors of the segment descriptor. Some such examples may further provide that each point descriptor of the plurality of point descriptors further comprises one or more corresponding tangent descriptors, and determining the polygon count for the segment is further based on the one or more tangent descriptors of the plurality of point descriptors of the segment descriptor. The processing circuitry then renders the segment using the determined polygon count.

As noted above, AR may be conventionally employed to visualize elements of a non-virtual device such as a vehicle for purposes of maintenance and repair. One use case involves using AR to view a virtual representation of a wiring element (e.g., a specific wire, a wire bundle, a wiring harness, and/or the like, as non-limiting examples) overlaid over non-virtual visual imagery data of the vehicle. This can assist a technician with identifying the wiring element and visualizing its location relative to other elements of the vehicle. Conventional approaches to applying AR in this use case may employ a CAD model that indicates key points of flow of the wiring element to generate a decimated data file of smaller size and reduced complexity. The decimated data file may then be used by an AR device to generate a 3D mesh that is overlaid on visual imagery data of the vehicle.

However, this conventional approach may suffer from shortcomings in some scenarios. In particular, conventional conversion of a CAD native data file into a decimated data file may seek to strike a balance between optimizing visual quality for user experience, minimizing polygon count to improve device performance, and minimizing file size to reduce transmission time and processing requirements. In the specific case of AR visualization of wiring elements of a vehicle, the relatively large number of polygons used to generate a CAD model of a wiring element may result in a decimated data file that is too large to be easily downloaded to an AR device, and that may be difficult to optimize while retaining sufficient visual quality. Moreover, a conventional decimated data file may not allow enough flexibility to render a single wire, as the original CAD native data file may have been generated at a wire bundle level.

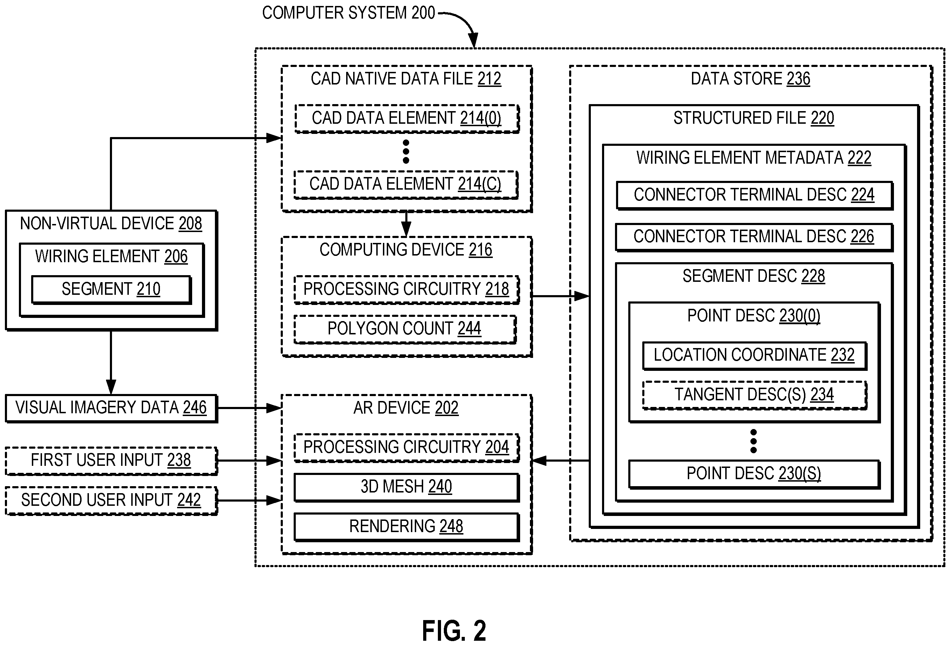

In this regard, **FIG. 2** illustrates an exemplary computer system **200** that is configured to automatically generate on-demand wiring element optimized meshes for AR devices. In the example of **FIG. 2****,** the computer system **200** includes an AR device **202** that comprises processing circuitry **204.** The AR device **202** may comprise, e.g., a smartphone, a tablet device, a specialized AR headset, and/or a set of specialized AR glasses, as non-limiting examples. The AR device **202** may be used to visualize a wiring element **206** of a non-virtual device **208.** The non-virtual device **208** may comprise a vehicle or an industrial machine, as non-limiting examples, while the wiring element **206** may comprise a wire, a wiring bundle, a wiring harness such as the wiring harness **100** of **FIGS. 1A-1C****,** and/or the like, as non-limiting examples. The wiring element **206** comprises a segment **210** that represents a portion of the wiring element **206** between two connector terminals. It is to be understood that, while **FIG. 2** illustrates only the singular segment **210** for the sake of clarity, in some examples the wiring element **206** may comprise a plurality of segments **210.**

As seen in **FIG. 2****,** the computer system **200** in some examples may include a CAD native data file **212** that defines a 3D model of the wiring element **206.** The CAD native data file **212** may comprise an open-source or proprietary CAD data file format. The CAD native data file **212** in such examples comprises a plurality of CAD data elements **214(0)-214(C)** that each define or represent a constituent element of the wiring element **206** and/or a characteristic or attribute of the constituent element, and that together can be used by appropriate CAD software to render a 3D representation of the wiring element **206.** Thus, for example, the CAD data elements **214(0)-214(C)** may represent the location and appearance of constituent elements such as connector terminals, and may further represent points through which wires or wire bundles may pass. The CAD data elements **214(0)-214(C)** may also represent mesh geometry data, which as used herein may include data defining polygons or triangles with which the wiring element **206** and the constituent elements thereof may be rendered by CAD software and/or data defining spline geometry of the wiring element **206.**

According to some examples, the computer system **200** also includes a computing device **216** that comprises processing circuitry **218.** In such examples, the processing circuitry **218** may obtain the CAD native data file **212** corresponding to the wiring element **206,** and may generate a structured file **220** based on the CAD native data file **212.** The structured file **220** may comprise, e.g., an Extensible Markup Language (XML) file. As seen in **FIG. 2****,** the structured file **220** comprises wiring element metadata **222** that includes a first connector terminal descriptor (captioned as "CONNECTOR TERMINAL DESC" in **FIG. 2****) 224,** a second connector terminal descriptor (captioned as "CONNECTOR TERMINAL DESC" in **FIG. 2****) 226,** and a segment descriptor (captioned as "SEGMENT DESC" in **FIG. 2****) 228** that corresponds to the segment **210** of the wiring element **206.** The first connector terminal descriptor **224** and the second connector terminal descriptor **226** identify connector terminals that represent the endpoints of the wiring element **206.** The segment descriptor **228** corresponds to a plurality of point descriptors (captioned as "POINT DESC" in **FIG. 2****) 230(0)-230(S).** The point descriptor **230(0)** shown in **FIG. 2** includes a location coordinate **232** that represents a location in 3D space of a corresponding point. In some examples, the point descriptor **230(0)** may also include one or more corresponding tangent descriptors (captioned as "TANGENT DESC(S)" in **FIG. 2****) 234** that represent incoming and/or outgoing tangents of the segment **210** as it passes through the corresponding point. While not shown in **FIG. 2****,** it is to be understood that all of the point descriptors **230(0)-230(S)** include elements corresponding to, e.g., the location coordinate **232** and the one or more tangent descriptors **234** of the point descriptor **230(0)** shown in **FIG. 2****.** It is to be further understood that the structured file **220** omits mesh geometry data for the wiring element **206.**

In some such examples, the processing circuitry **218** may generate the structured file **220** by identifying a CAD data element within the CAD native data file **212** (such as the CAD data element **214(0))** that corresponds the first connector terminal descriptor **224,** the second connector terminal descriptor **226,** the segment descriptor **228,** or a point descriptor of the plurality of point descriptors **230(0)-230(S)** of the segment descriptor **228.** The processing circuitry **218** then generates the wiring element metadata **222** based on the identified CAD data element **214(0),** and stores the structured file **220** (e.g., in a data store **236** from which the AR device **202** can access the structured file **220).**

To visualize the wiring element **206,** the processing circuitry **204** of the AR device **202** obtains the structured file **220** corresponding to the wiring element **206** of the non-virtual device **208.** The structure file **220** may be obtained by, e.g., by downloading or otherwise remotely accessing the structured file **220** stored on a computing device remote to the AR device **202,** and/or by accessing the structured file **220** stored on a local storage device of the AR device **202,** as non-limiting examples. The processing circuitry **204** in some examples may obtain the structured file **220** responsive to receiving a first user input **238** indicating a selection of the non-virtual device **208.** The processing circuitry **204** then generates a 3D mesh **240** for the wiring element **206** based on the structured file **220.** Some examples may provide that the processing circuitry **204** generates the 3D mesh **240** responsive to receiving a second user input **242** indicating a selection of the wiring element **206.**

According to some examples, the processing circuitry may generate the 3D mesh **240** by determining a polygon count **244** for the segment **210.** The polygon count **244** may be determined based on, e.g., a length of the segment **210** and the location coordinates and the one or more tangent descriptors of the plurality of point descriptors **230(0)-230(S)** of the segment descriptor **228.** The processing circuitry **204** then renders the segment **210** using the determined polygon count **244.** In this manner, the 3D mesh **240** may be dynamically optimized based on maximizing the visual quality of the 3D mesh **240** while minimizing the polygon count **244** to improve device performance. The processing circuitry **204** then receives visual imagery data **246** of the non-virtual device **208.** The visual imagery data **246** may comprise, e.g., a live video stream of the non-virtual device **208** that is captured by the AR device **202.** The processing circuitry **204** displays a rendering **248** of the 3D mesh **240** overlaid on the visual imagery data **246** of the non-virtual device **208.**

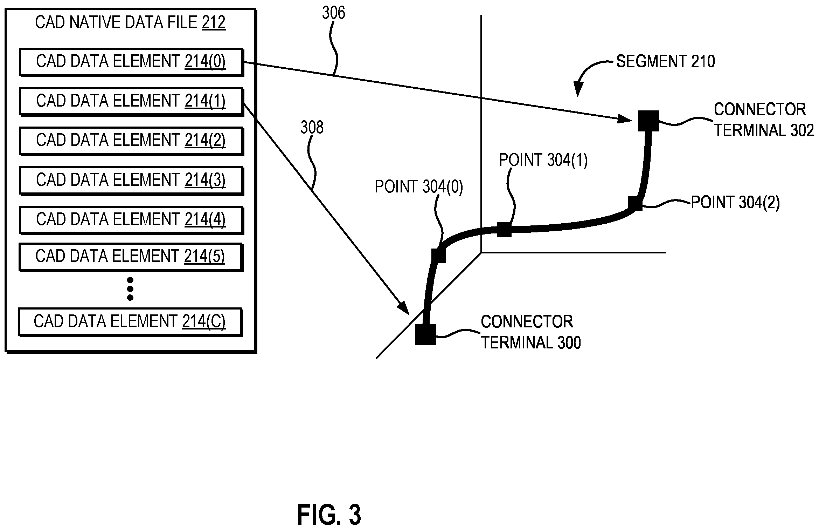

**FIG. 3** is a block diagram illustrating exemplary constituent elements of the CAD native data file **212** of **FIG. 2** and corresponding exemplary constituent elements of the segment **210** of **FIG. 2** according to an example. In **FIG. 3****,** the segment **210** of **FIG. 2** is shown as it may be rendered by a CAD application according to some examples. The segment **210** comprises a first connector terminal (captioned as "CONNECTOR TERMINAL in **FIG. 3****") 300** and a second connector terminal (captioned as "CONNECTOR TERMINAL in **FIG. 3****") 302** that correspond to the first connector terminal descriptor **224** and the second connector terminal descriptor **226** of **FIG. 2****,** and that define the endpoints of the wiring element **206** of **FIG. 2****.** The segment **210** further comprises points **304(0)-304(2),** each of which represents a location in 3D space through which the segment **210** flows.

In the example of **FIG. 3****,** the CAD data elements **214(0)-214(C)** of the CAD native data file **212** define a CAD model of the segment **210** as shown in **FIG. 3****.** For instance, the CAD data element **214(0)** in this example corresponds to and defines the characteristics of the connector terminal **302** as indicated by arrow **306,** while the CAD data element **214(1)** corresponds to and defines the characteristics of the connector terminal **300** as indicated by arrow **308.** In similar fashion, the CAD data elements **214(2)-214(4)** may correspond to and define the characteristics of the points **304(0)-304(2),** respectively. The remaining CAD data elements **214(5)-214(C)** may provide other data for the CAD model of the segment **210,** such as mesh geometry data, that is not used when generating the structured file **220** of **FIG. 2****.**

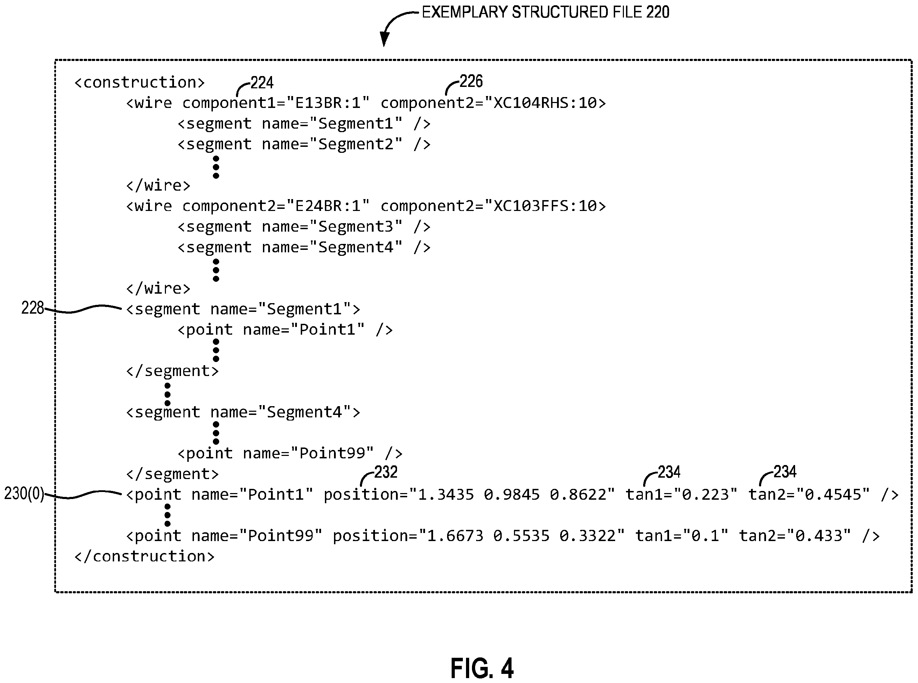

To illustrate exemplary constituent elements of the structured file **220** of **FIG. 2** according to an example, **FIG. 4** is provided. As seen in **FIG. 4****,** the structured file **220** in this example comprises an XML file that may be generated based on a CAD native data file such as the CAD native data file of **FIGS. 2** and **3****.** The first connector terminal descriptor **224** and the second connector terminal descriptor **226** are provided as attributes of a "wire" node that corresponds to the wiring element **206** of **FIG. 2****.** The segment descriptor **228** is represented by a "segment" node that may correspond to multiple "point" nodes, each of which in turn corresponds to one of the point descriptors **230(0)-230(S)** of **FIG. 2** (note that only the point descriptor **230(0)** is represented in **FIG. 4** for the sake of clarity). Finally, a "point" node corresponding to the point descriptor **230(0)** of **FIG. 2** includes a "position" attribute that corresponds to the location coordinate **232** of **FIG. 2****,** and also includes "tanl" and "tan2" attributes that correspond to the one or more tangent descriptors **234** of **FIG. 2****.** It is to be understood that some examples may provide that the contents of the structured file **220** may differ from that illustrated in **FIG. 4** according to the requirements of such examples, and thus may include more, fewer, or different nodes and/or attributes than those illustrated in **FIG. 4****.**

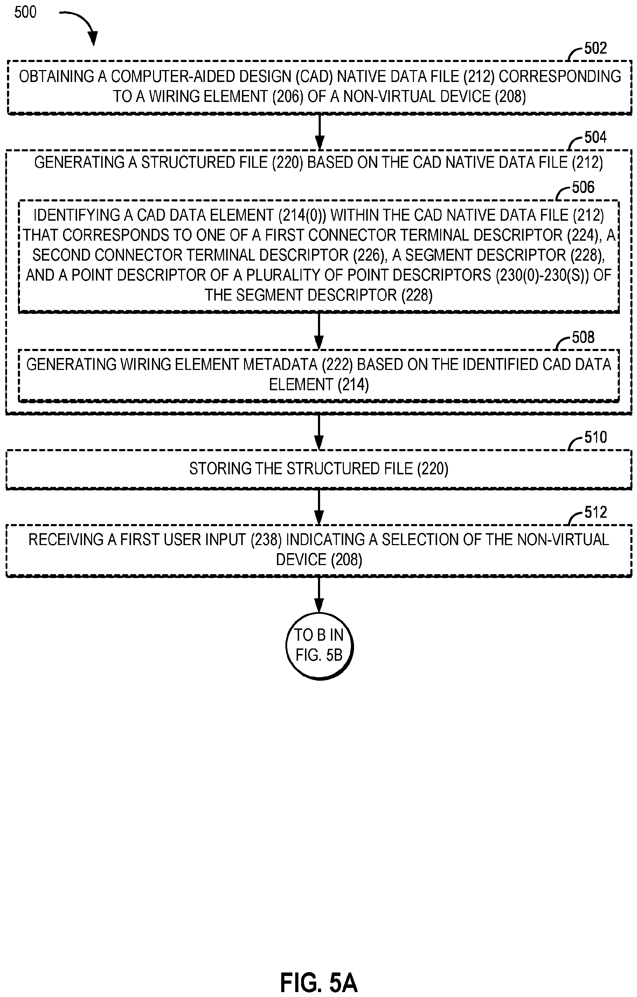

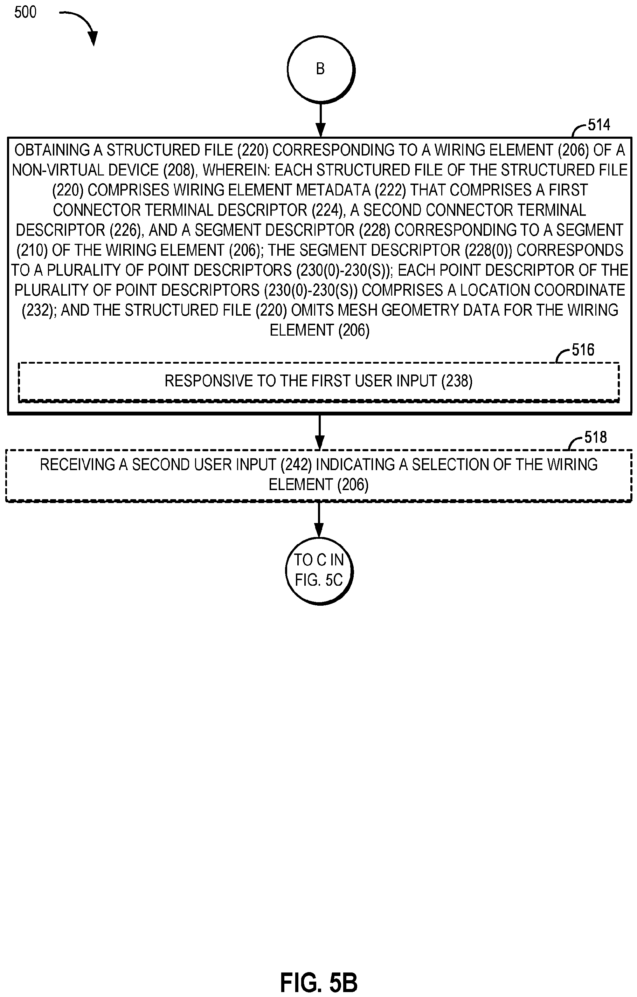

**FIGS. 5A-5C** provide a flow chart of an exemplary method to automatically generate on-demand wiring element optimized meshes for AR devices according to an example. **FIGS. 5A-5C** show exemplary operations **500,** with elements of **FIG. 2** being referenced in describing **FIGS. 5A-5C** for the sake of clarity. In **FIG. 5A****,** the exemplary operations **500** in some examples begins with processing circuitry (e.g., the processing circuitry **204** of **FIG. 2****)** of a computer system (such as the computer system **200** of **FIG. 2****)** obtaining a CAD native data file (e.g., the CAD native data file **212** of **FIG. 2****)** corresponding to a wiring element (e.g., the wiring element **206** of **FIG. 2****)** of a non-virtual device (such as the non-virtual device **208** of **FIG. 2****)** (block **502** of **FIG. 5A****).** The processing circuitry **204** generates a structured file (e.g., the structured file **220** of **FIG. 2****)** based on the CAD native data file **212** (block **504** of **FIG. 5A****).** According to some examples, the operations of block **504** for generating the structured file **220** may comprise the processing circuitry **204** identifying a CAD data element (such as the CAD data element **214(0)** of **FIG. 2****)** within the CAD native data file **212** that corresponds to one of a first connector terminal descriptor (e.g., the connector terminal descriptor **224** of **FIG. 2****),** a second connector terminal descriptor (such as the connector terminal descriptor **226** of **FIG. 2****),** a segment descriptor (e.g., the segment descriptor **228** of **FIG. 2****),** and a point descriptor of a plurality of point descriptors (such as the point descriptors **230(0)-230(S)** of **FIG. 2****)** of the segment descriptor **228** (block **506** of **FIG. 5A****).** The processing circuitry **204** then generates wiring element metadata (e.g., the wiring element metadata **222** of **FIG. 2****)** based on the identified CAD data element **214(0)** (block **508** of **FIG. 5A****).** The processing circuitry **204** in such examples then stores the structured file **220** (block **510** of **FIG. 5A****).** Some examples may further provide that the processing circuitry **204** receives a first user input (such as the first user input **238** of **FIG. 2****)** indicating a selection of the non-virtual device **208** (block **512** of **FIG. 5A****).** The exemplary operations **500** then continue at block **514** of **FIG. 5B****.**

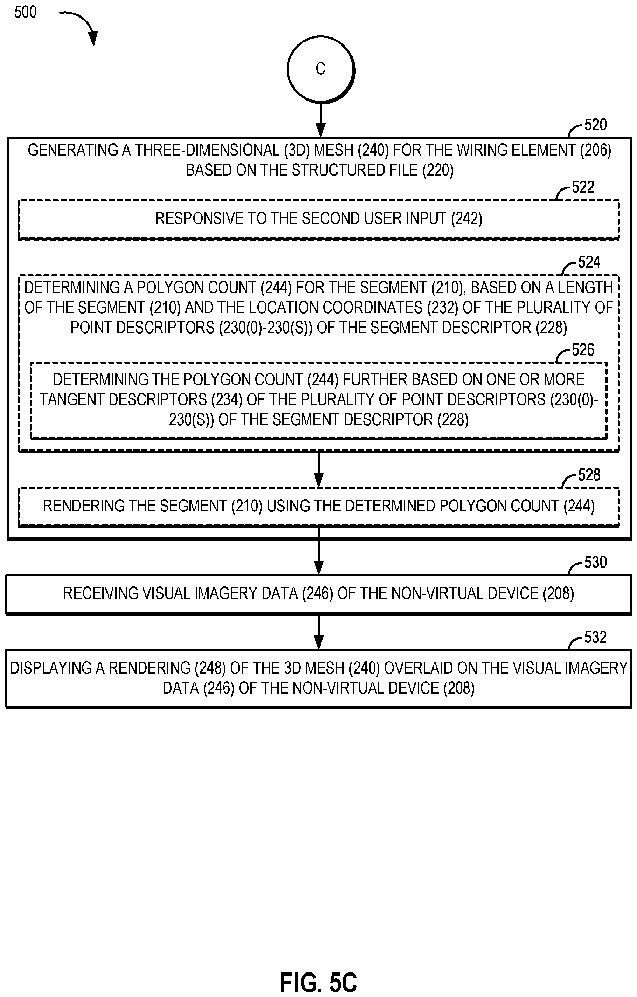

Turning now to **FIG. 5B****,** the processing circuitry **204** obtains a structured file (e.g., the structured file **220** of **FIG. 2****)** corresponding to the wiring element **206** of the non-virtual device **208** (block **514** of **FIG. 5B****).** As noted above, the structured file **220** comprises the wiring element metadata **222** of **FIG. 2** that comprises the first connector terminal descriptor **224** of **FIG. 2****,** the second connector terminal descriptor **226** of **FIG. 2****,** and the segment descriptor **228** of **FIG. 2** that corresponds to the segment **210** of the wiring element **206.** Additionally, the segment descriptor **228** comprises the plurality of point descriptors **230(0)-230(S)** of **FIG. 2****,** and each point descriptor of the plurality of point descriptors **230(0)-230(S)** comprises the location coordinate **232** of **FIG. 2****.** Finally, the structured file **220** omits mesh geometry data for the wiring element **206.** In some examples, the operations of block **514** for obtaining the structured file **220** may be performed by the processing circuitry **204** responsive to the first user input **238** (block **516** of **FIG. 5B****).** Some examples may provide that the processing circuitry **204** receives a second user input (such as the second user input **242** of **FIG. 2****)** indicating a selection of the wiring element **206** (block **518** of **FIG. 5B****).** The exemplary operations **500** then continue at block **520** of **FIG. 5C****.**

Referring now to **FIG. 5C****,** the processing circuitry **204** generates a 3D mesh (e.g., the 3D mesh **240** of **FIG. 2****)** for the wiring element **206** based on the structured file **220** (block **520** of **FIG. 5C****).** According to some examples, the operations of block **520** for generating the 3D mesh **240** may be performed by the processing circuitry **204** responsive to the second user input **242** (block **522** of **FIG. 5C****).** In some examples, the operations of block **520** for generating the 3D mesh **240** may comprise the processing circuitry **204** determining a polygon count (e.g., the polygon count **244** of **FIG. 2****)** for the segment **210,** based on a length of the segment **210** and the location coordinates **232** of the plurality of point descriptors **230(0)-230(S)** of the segment descriptor **228** (block **524** of **FIG. 5C****).** Some such examples may further provide that the operations of block **524** for determining the polygon count **244** are further based on one or more tangent descriptors (such as the one or more tangent descriptors **234** of **FIG. 2****)** of the plurality of point descriptors **230(0)-230(S)** of the segment descriptor **228** (block **526** of **FIG. 5C****).** The processing circuitry **204** then renders the segment **210** using the determined polygon count **244** (block **528** of **FIG. 5C****).**

The processing circuitry **204** then receives visual imagery data (such as the visual imagery data **246** of **FIG. 2****)** of the non-virtual device **208** (block **530** of **FIG. 5C****).** The processing circuitry **204** displays a rendering (such as the rendering **248** of **FIG. 2****)** of the 3D mesh **240** overlaid on the visual imagery data **246** of the non-virtual device **208** (block **532** of **FIG. 5C****).**

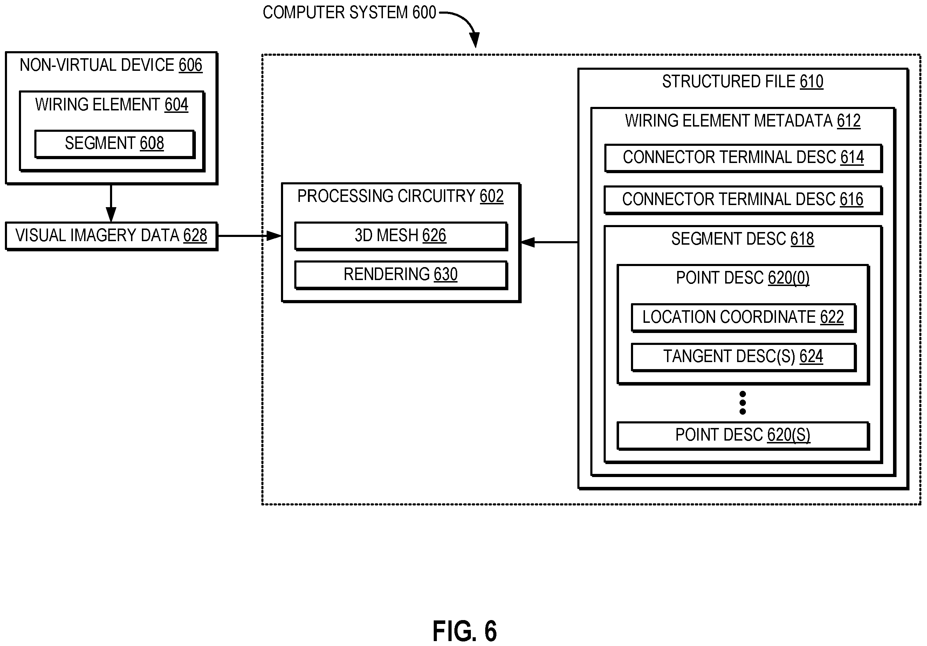

**FIG. 6** is another view of the computer system **200** of **FIG. 2** according to an example. In **FIG. 6****,** an exemplary computer system **600** comprises processing circuitry **602** that is configured to enable visualization of a wiring element **604** of a non-virtual device **606.** The wiring element **604** comprises a segment **608** that represents a portion of the wiring element **604** between two connector terminals.

To visualize the wiring element **604,** the processing circuitry **602** obtains (e.g., by downloading or otherwise remotely accessing) a structured file **610** corresponding to the wiring element **604** of the non-virtual device **606.** The structured file **610** comprises wiring element metadata **612** that includes a first connector terminal descriptor (captioned as "CONNECTOR TERMINAL DESC" in **FIG. 6****) 614,** a second connector terminal descriptor (captioned as "CONNECTOR TERMINAL DESC" in **FIG. 6****) 616,** and a segment descriptor (captioned as "SEGMENT DESC" in **FIG. 6****) 618** that corresponds to the segment **608** of the wiring element **604.** The segment descriptor **618** corresponds to a plurality of point descriptors (captioned as "POINT DESC" in **FIG. 6****) 620(0)-620(S).** The point descriptor **620(0)** shown in **FIG. 6** includes a location coordinate **622** that represents a location in 3D space of a corresponding point, and one or more corresponding tangent descriptors (captioned as "TANGENT DESC(S)" in **FIG. 6****) 624** that represent incoming and/or outgoing tangents of the segment **608** as it passes through the corresponding location. While not shown in **FIG. 6****,** it is to be understood that all of the point descriptors **620(0)-620(S)** include elements corresponding to the location coordinate **622** and the one or more tangent descriptors **624** of the point descriptor **620(0)** shown in **FIG. 6****.** It is to be further understood that the structured file **610** omits mesh geometry data for the wiring element **604.**

The processing circuitry **602** then generates a 3D mesh **626** for the wiring element **604** based on the structured file **610.** The processing circuitry **602** receives visual imagery data **628** of the non-virtual device **606,** and displays a rendering **630** of the 3D mesh **626** overlaid on the visual imagery data **628** of the non-virtual device **606.**

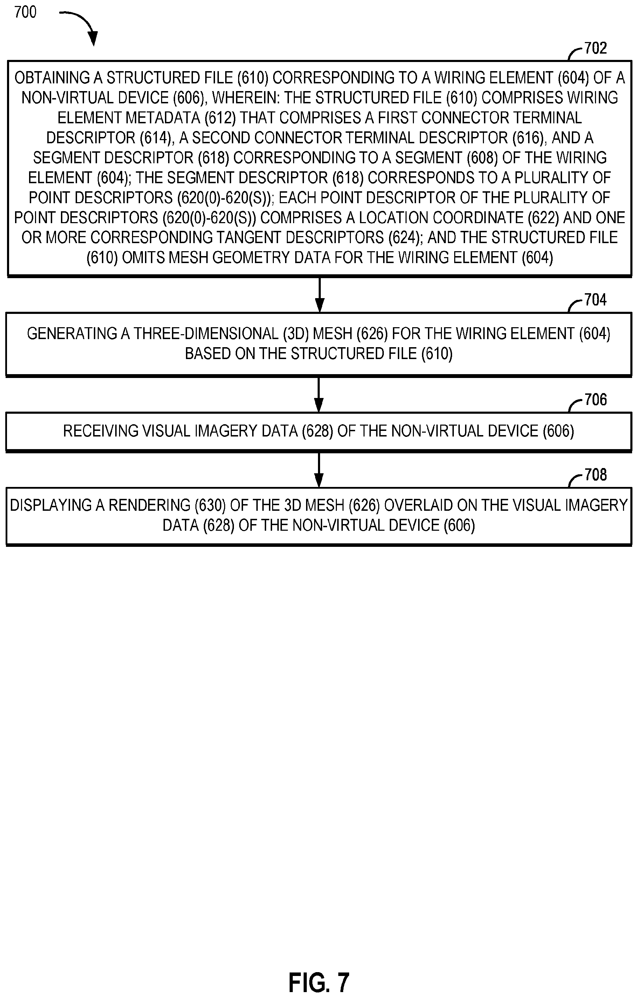

**FIG. 7** is a flow chart of an exemplary method to automatically generate on-demand wiring element optimized meshes for AR devices according to an example. In **FIG. 7****,** exemplary operations **700** are shown, with elements of **FIG. 6** being referenced in describing **FIG. 7** for the sake of clarity. The exemplary operations **700** in **FIG. 7** begin with processing circuitry (e.g., the processing circuitry **602** of **FIG. 6****)** of a computer system (such as the computer system **600** of **FIG. 6****)** obtaining a structured file (e.g., the structured file **610** of **FIG. 6****)** corresponding to a wiring element (such as the wiring element **604** of **FIG. 6****)** of a non-virtual device (e.g., the non-virtual device **606** of **FIG. 6****)** (block **702** of **FIG.** 7). As noted above, the structured file **610** comprises the wiring element metadata **612** of **FIG. 6** that comprises the first connector terminal descriptor **614** of **FIG. 6****,** the second connector terminal descriptor **616** of **FIG. 6****,** and the segment descriptor **618** of **FIG. 6** that corresponds to the segment **608** of the wiring element **604.** Additionally, the segment descriptor **618** comprises the plurality of point descriptors **620(0)-620(S)** of **FIG. 6****,** and each point descriptor of the plurality of point descriptors **620(0)-620(S)** comprises the location coordinate **622** of **FIG. 6** and the one or more corresponding tangent descriptors **624** of **FIG. 6****.** Finally, the structured file **610** omits mesh geometry data for the wiring element **604.**

The processing circuitry **602** generates a 3D mesh (such as the 3D mesh **626** of **FIG. 6****)** for the wiring element **604** based on the structured file **610** (block **704** of **FIG. 7****).** The processing circuitry **602** next receives visual imagery data (e.g., the visual imagery data **628** of **FIG. 6****)** of the non-virtual device **606** (block **706** of **FIG. 7****).** The processing circuitry **602** then displays a rendering (such as the rendering **630** of **FIG. 6****)** of the 3D mesh **626** overlaid on the visual imagery data **628** of the non-virtual device **606** (block **708** of **FIG. 7****).**

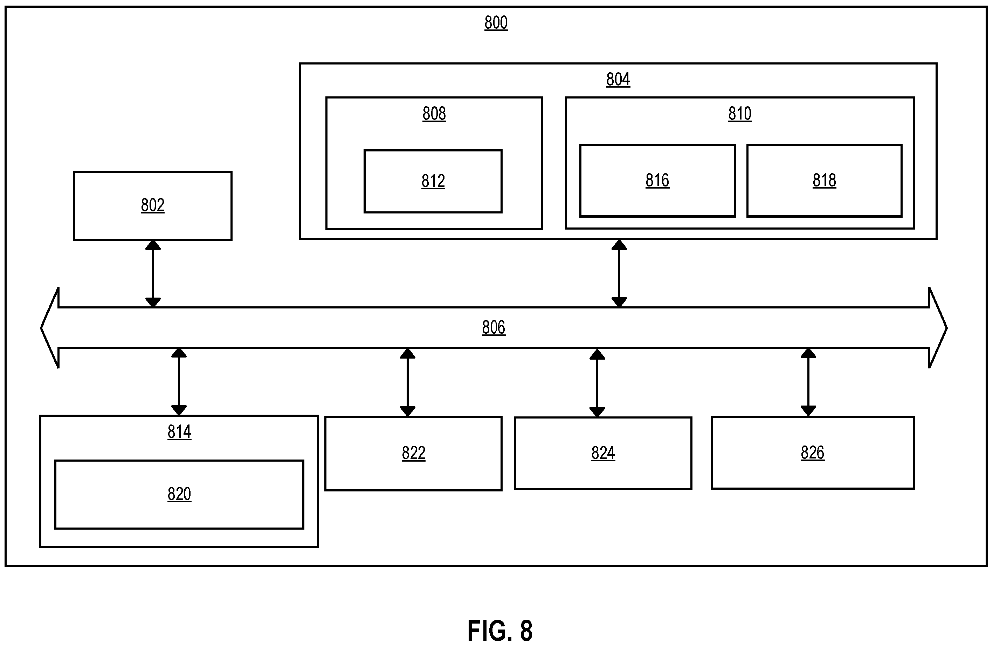

**FIG. 8** is a schematic diagram of a computer system **800** for implementing examples disclosed herein. The computer system **800** is adapted to execute instructions from a computer-readable medium to perform these and/or any of the functions or processing described herein. The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804,** and a system bus **806.** The computer system **800** may include at least one computing device having the processing circuitry **802.** The system bus **806** provides an interface for system components including, but not limited to, the memory **804** and the processing circuitry **802.** The processing circuitry **802** may include any number of hardware components for conducting data or signal processing or for executing computer code stored in memory **804.** The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802.** A basic input/output system (BIOS) **812** may be stored in the non-volatile memory **808** and can include the basic routines that help to transfer information between elements within the computer system **800.**

The computer system **800** may further include or be coupled to a non-transitory computer-readable storage medium such as the storage device **814,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810,** which may include an operating system **816** and/or one or more program modules **818.** All or a portion of the examples disclosed herein may be implemented as a computer program **820** stored on a transitory or non-transitory computer-usable or computer-readable storage medium (e.g., single medium or multiple media), such as the storage device **814,** which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802.** In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802.** The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Implementation examples are described in the following numbered clauses:
Example 1: A computer system comprising processing circuitry configured to:
   obtain a structured file corresponding to a wiring element of a non-virtual device, wherein:
      the structured file comprises wiring element metadata that comprises a first connector terminal descriptor, a second connector terminal descriptor, and a segment descriptor corresponding to a segment of the wiring element;
      the segment descriptor corresponds to a plurality of point descriptors;
      each point descriptor of the plurality of point descriptors comprises a location coordinate; and
      the structured file omits mesh geometry data for the wiring element;
   generate a three-dimensional (3D) mesh for the wiring element based on the structured file;
   receive visual imagery data of the non-virtual device; and
   display a rendering of the 3D mesh overlaid on the visual imagery data of the non-virtual device.
Example 2: The computer system of example 1, wherein the processing circuitry is further configured to:
   obtain a Computer-Aided Design (CAD) native data file corresponding to the wiring element;
   generate the structured file based on the CAD native data file; and
   store the structured file.
Example 3: The computer system of any one of examples 1-2, wherein the processing circuitry is configured to generate the structured file based on the CAD native data file by being configured to:
   identify a CAD data element within the CAD native data file that corresponds to one of the first connector terminal descriptor, the second connector terminal descriptor, the segment descriptor, and a point descriptor of the plurality of point descriptors of the segment descriptor; and
   generate the wiring element metadata based on the identified CAD data element.
Example 4: The computer system of any one of examples 1-3, wherein the processing circuitry is configured to generate the 3D mesh for the wiring element based on the structured file by being configured to:
   determine a polygon count for the segment, based on a length of the segment and the location coordinates of the plurality of point descriptors of the segment descriptor; and
   render the segment using the determined polygon count.
Example 5: The computer system of any one of examples 1-4, wherein:
   each point descriptor of the plurality of point descriptors further comprises one or more corresponding tangent descriptors; and
   the processing circuitry is configured to determine the polygon count for the segment further based on the one or more tangent descriptors of the plurality of point descriptors of the segment descriptor.
Example 6: The computer system of any one of examples 1-5, wherein:
   the processing circuitry is further configured to receive a first user input indicating a selection of the non-virtual device; and
   the processing circuitry is configured to obtain the structured file corresponding to the wiring element of the non-virtual device responsive to the first user input.
Example 7: The computer system of any one of examples 1-6, wherein:
   the processing circuitry is further configured to receive a second user input indicating a selection of the wiring element; and
   the processing circuitry is configured to generate the 3D mesh based on the structured file responsive to the second user input.
Example 8: The computer system of any one of examples 1-7, wherein the wiring element comprises one of a wire, a wiring bundle, and a wiring harness.
Example 9: The computer system of any one of examples 1-8, wherein the non-virtual device comprises a vehicle.
Example 10: A computer-implemented method, comprising:
   obtaining, by processing circuitry of a computer system, a structured file corresponding to a wiring element of a non-virtual device, wherein:
      the structured file comprises wiring element metadata that comprises a first connector terminal descriptor, a second connector terminal descriptor, and a segment descriptor corresponding to a segment of the wiring element;
      the segment descriptor corresponds to a plurality of point descriptors;
      each point descriptor of the plurality of point descriptors comprises a location coordinate; and
      the structured file omits mesh geometry data for the wiring element;
   generating, by the processing circuitry, a three-dimensional (3D) mesh for the wiring element based on the structured file;
   receiving, by the processing circuitry, visual imagery data of the non-virtual device; and
   displaying, by the processing circuitry, a rendering of the 3D mesh overlaid on the visual imagery data of the non-virtual device.
Example 11: The computer-implemented method of example 10, further comprising:
   obtaining, by the processing circuitry, a Computer-Aided Design (CAD) native data file corresponding to the wiring element;
   generating, by the processing circuitry, the structured file based on the CAD native data file; and
   storing, by the processing circuitry, the structured file.
Example 12: The computer-implemented method of any one of examples 10-11, wherein generating the structured file based on the CAD native data file comprises:
   identifying, by the processing circuitry, a CAD data element within the CAD native data file that corresponds to one of the first connector terminal descriptor, the second connector terminal descriptor, the segment descriptor, and a point descriptor of the plurality of point descriptors of the segment descriptor; and
   generating, by the processing circuitry, the wiring element metadata based on the identified CAD data element.
Example 13: The computer-implemented method of any one of examples 10-12, wherein generating the 3D mesh for the wiring element based on the structured file comprises:
   determining, by the processing circuitry, a polygon count for the segment, based on a length of the segment and the location coordinates of the plurality of point descriptors of the segment descriptor; and
   rendering, by the processing circuitry, the segment using the determined polygon count.
Example 14: The computer-implemented method of any one of examples 10-13, wherein:
   each point descriptor of the plurality of point descriptors further comprises one or more corresponding tangent descriptors; and
   determining the polygon count for the segment is further based on the one or more tangent descriptors of the plurality of point descriptors of the segment descriptor.
Example 15: The computer-implemented method of any one of examples 10-14, further comprising receiving, by the processing circuitry, a first user input indicating a selection of the non-virtual device;
   wherein obtaining the structured file corresponding to the wiring element of the non-virtual device is responsive to the first user input.
Example 16: The computer-implemented method of any one of examples 10-15, further comprising receiving, by the processing circuitry, a second user input indicating a selection of the wiring element;
   wherein generating the 3D mesh based on the structured file is responsive to the second user input.
Example 17: The computer-implemented method of any one of examples 10-16, wherein the wiring element comprises one of a wire, a wiring bundle, and a wiring harness.
Example 18: The computer-implemented method of any one of examples 10-17, wherein the non-virtual device comprises a vehicle.
Example 110: A computer program product comprising program code for performing, when executed by the processing circuitry, the method of any of examples 10-18.
Example 20: A non-transitory computer-readable storage medium comprising instructions, which when executed by the processing circuitry, cause the processing circuitry to perform the method of any of examples 10-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:
obtain a structured file corresponding to a wiring element of a non-virtual device, wherein:
the structured file comprises wiring element metadata that comprises a first connector terminal descriptor, a second connector terminal descriptor, and a segment descriptor corresponding to a segment of the wiring element;
the segment descriptor corresponds to a plurality of point descriptors;
each point descriptor of the plurality of point descriptors comprises a location coordinate; and
the structured file omits mesh geometry data for the wiring element;
generate a three-dimensional (3D) mesh for the wiring element based on the structured file;
receive visual imagery data of the non-virtual device; and
display a rendering of the 3D mesh overlaid on the visual imagery data of the non-virtual device.

2. The computer system of claim 1, wherein the processing circuitry is further configured to:
obtain a Computer-Aided Design (CAD) native data file corresponding to the wiring element;
generate the structured file based on the CAD native data file; and
store the structured file.

3. The computer system of any one of claims 1-2, wherein the processing circuitry is configured to generate the structured file based on the CAD native data file by being configured to:
identify a CAD data element within the CAD native data file that corresponds to one of the first connector terminal descriptor, the second connector terminal descriptor, the segment descriptor, and a point descriptor of the plurality of point descriptors of the segment descriptor; and
generate the wiring element metadata based on the identified CAD data element.

4. The computer system of any one of claims 1-3, wherein the processing circuitry is configured to generate the 3D mesh for the wiring element based on the structured file by being configured to:
determine a polygon count for the segment, based on a length of the segment and the location coordinates of the plurality of point descriptors of the segment descriptor; and
render the segment using the determined polygon count.

5. The computer system of any one of claims 1-4, wherein:
each point descriptor of the plurality of point descriptors further comprises one or more corresponding tangent descriptors; and
the processing circuitry is configured to determine the polygon count for the segment further based on the one or more tangent descriptors of the plurality of point descriptors of the segment descriptor.

6. The computer system of any one of claims 1-5, wherein:
the processing circuitry is further configured to receive a first user input indicating a selection of the non-virtual device; and
the processing circuitry is configured to obtain the structured file corresponding to the wiring element of the non-virtual device responsive to the first user input.

7. The computer system of any one of claims 1-6, wherein:
the processing circuitry is further configured to receive a second user input indicating a selection of the wiring element; and
the processing circuitry is configured to generate the 3D mesh based on the structured file responsive to the second user input.

8. A computer-implemented method, comprising:
obtaining, by processing circuitry of a computer system, a structured file corresponding to a wiring element of a non-virtual device, wherein:
the structured file comprises wiring element metadata that comprises a first connector terminal descriptor, a second connector terminal descriptor, and a segment descriptor corresponding to a segment of the wiring element;
the segment descriptor corresponds to a plurality of point descriptors;
each point descriptor of the plurality of point descriptors comprises a location coordinate; and
the structured file omits mesh geometry data for the wiring element;
generating, by the processing circuitry, a three-dimensional (3D) mesh for the wiring element based on the structured file;
receiving, by the processing circuitry, visual imagery data of the non-virtual device; and
displaying, by the processing circuitry, a rendering of the 3D mesh overlaid on the visual imagery data of the non-virtual device.

9. The computer-implemented method of claim 8, further comprising:
obtaining, by the processing circuitry, a Computer-Aided Design (CAD) native data file corresponding to the wiring element;
generating, by the processing circuitry, the structured file based on the CAD native data file; and
storing, by the processing circuitry, the structured file.

10. The computer-implemented method of any one of claims 8-9, wherein generating the structured file based on the CAD native data file comprises:
identifying, by the processing circuitry, a CAD data element within the CAD native data file that corresponds to one of the first connector terminal descriptor, the second connector terminal descriptor, the segment descriptor, and a point descriptor of the plurality of point descriptors of the segment descriptor; and
generating, by the processing circuitry, the wiring element metadata based on the identified CAD data element.

11. The computer-implemented method of any one of claims 8-10, wherein generating the 3D mesh for the wiring element based on the structured file comprises:
determining, by the processing circuitry, a polygon count for the segment, based on a length of the segment and the location coordinates of the plurality of point descriptors of the segment descriptor; and
rendering, by the processing circuitry, the segment using the determined polygon count.

12. The computer-implemented method of any one of claims 8-11, wherein:
each point descriptor of the plurality of point descriptors further comprises one or more corresponding tangent descriptors; and
determining the polygon count for the segment is further based on the one or more tangent descriptors of the plurality of point descriptors of the segment descriptor.

13. The computer-implemented method of any one of claims 8-12, further comprising receiving, by the processing circuitry, a first user input indicating a selection of the non-virtual device;
wherein obtaining the structured file corresponding to the wiring element of the non-virtual device is responsive to the first user input.

14. A computer program product comprising program code for performing, when executed by the processing circuitry, the method of any of claims 8-13.

15. A non-transitory computer-readable storage medium comprising instructions, which when executed by the processing circuitry, cause the processing circuitry to perform the method of any of claims 8-13.
